# EUROPEAN PATENT APPLICATION

(11) **EP 4 325 320 A1**
(43) Date of publication of application: **21.02.2024**
(21) Application number: 22787404.7
(22) Date of filing: 01.04.2022
(51) Int. Cl.: G05D 1/02

(54) **OBSTACLE AVOIDANCE METHOD AND APPARATUS FOR ROBOT, ROBOT, STORAGE MEDIUM, AND ELECTRONIC DEVICE**

(30) Priority: 15.04.2021 CN 202110406684
(71) Applicant: Beijing Roborock Innovation Technology Co., Ltd., Beijing 102206 (CN)
(72) Inventor: ZHANG, Lei, Beijing 102206 (CN); GUAN, Xin, Beijing 102206 (CN)
(74) Representative: Manitz Finsterwald Patent- und Rechtsanwaltspartnerschaft mbB
(86) International application number: PCT/CN2022/084903
(87) International publication number: WO 2022/218177

(57) **Abstract**

An obstacle avoidance method for a robot, an obstacle avoidance apparatus for a robot, a robot, a computer-readable storage medium, and an electronic device. The obstacle avoidance method for a robot comprises: determining a target location of travel of a robot; determining an avoidance mode of the robot; and when the robot is traveling, if it is detected that a first obstacle exists between a current location of the robot and the target location of travel, controlling the robot to travel along an outer periphery of the first obstacle, so as to go around the first obstacle, wherein the height of the first obstacle is less than the measurement height range of the robot. The present disclosure can improve the operating efficiency of the robot, and the continuity of work by the robot can be improved.

## Description

### CROSS-REFERENCE TO RELATED APPLICATION

This application claims priority to Chinese Patent Application No. 202110406684.5, filed on April 15, 2021, which is incorporated herein by reference in its entirety.

### TECHNICAL FIELD

The present disclosure relates to the field of robot control technologies, and in particular to an obstacle avoidance method for a robot, an obstacle avoidance apparatus for a robot, a robot, a computer-readable storage medium, and an electronic device.

### BACKGROUND

With the development of science and technology, various intelligent robots have emerged in life, such as sweeping robots, mopping robots, and vacuuming robots, etc., to reduce the burden of people's housework.

An existing sweeping robot may first determine the presence of an event (or an object) in an advancing direction and determine a physical characteristic of the event (or object) by means of a laser distance sensor (LDS) and an ultrasonic sensor. The event (or object) may be, for example, an obstacle or a wall. Then, a driving wheel assembly of the sweeping robot may cause the sweeping robot to respond to the event (or the object), for example, to stay away from the obstacle. However, when an event (or object) that cannot be measured by the LDS exists in the advancing direction of the sweeping robot, the sweeping robot will not be able to take corresponding measures against the obstacle, resulting in the problem of stopping running.

It should be noted that information disclosed in the Background section is only intended to enhance understanding of the background of the present disclosure, and thus may include information that does not constitute the prior art known to those of ordinary skill in the art.

### BRIEF SUMMARY

An objective of the present disclosure is to provide an obstacle avoidance method for a robot, an obstacle avoidance apparatus for an robot, a robot, a computer-readable storage medium, and an electronic device, so as to solve, at least to some extent, the problems of low operation efficiency and poor operation continuity of the robot due to limitations and defects in the related art.

According to a first aspect of the present disclosure, an obstacle avoidance method for a robot is provided, including: determining a target traveling position of the robot; determining an avoidance mode of the robot; and in response to detecting that a first obstacle exists between a current position and the target traveling position of the robot during traveling of the robot, controlling the robot to travel along an outer edge of the first obstacle so as to bypass the first obstacle, where the height of the first obstacle is less than a measurement height range of the robot.

According to a second aspect of the present disclosure, an obstacle avoidance apparatus for a robot is provided, including: a position determination module, configured to determine a target traveling position of the robot; a mode selection module, configured to determine an avoidance mode of the robot; and a travel control module, configured to control the robot to travel along an outer edge of a first obstacle so as to bypass the first obstacle in response to detecting that the first obstacle exists between a current position and the target traveling position of the robot during traveling of the robot, where the height of the first obstacle is less than a measurement height range of the robot.

In an embodiment of the present disclosure, the travel control module may be configured to monitor the distance between the robot and the first obstacle, and control the robot to travel along the outer edge of the first obstacle when the distance is less than a distance threshold.

In an embodiment of the present disclosure, the travel control module may be further configured to: control the robot to deflect by a preset angle to advance away from the first obstacle when the distance is less than the distance threshold; and control the robot to deflect reversely by the preset angle to travel towards the first obstacle when the distance between the first obstacle and the current position of the robot after advancing is greater than the distance threshold.

In an embodiment of the present disclosure, the obstacle avoidance apparatus for a robot may further include an obstacle detection module, configured to detect the presence or absence of a first obstacle between the current position and the target traveling position of the robot at preset time intervals during traveling along the outer edge of the first obstacle.

In an embodiment of the present disclosure, an obstacle detection apparatus for a robot may further include a path determination module, configured to control the robot to continue traveling along a target traveling path to reach the target traveling position in response to detecting the absence of the first obstacle between the robot and the target traveling position, where the target traveling path is a straight-line path or an approximate straight-line path between the robot and the target traveling position.

In an embodiment of the present disclosure, the obstacle avoidance apparatus for a robot may further include a direction adjustment module, configured to: determine a reverse direction of a current traveling direction when a second obstacle exists in the current traveling direction of the robot during traveling along the outer edge of the first obstacle; and control, based on the reverse direction, the robot to travel along the outer edge of the first obstacle so as to bypass the first obstacle, where the second obstacle is located at the outer edge of the first obstacle and prevents the robot from continuing traveling.

In an embodiment of the present disclosure, the obstacle avoidance apparatus for a robot may further include a position comparison module, configured to control the robot to end traveling and send a warning message in response to detecting that the first obstacle exists between the current position and the target traveling position of the robot after the robot travels around the outer edge of the first obstacle once.

According to a third aspect of the present disclosure, a robot is provided, including: a first obstacle detection apparatus, configured to detect the presence or absence of a first obstacle between a current position of the robot and a target traveling position of the robot, where the height of the first obstacle is less than a measurement height range of the robot and greater than an obstacle-crossing height threshold of the robot; and an obstacle avoidance apparatus for a robot, configured to determine the target traveling position of the robot, determine an avoidance mode of the robot, and control the robot to travel along an outer edge of the first obstacle so as to bypass the first obstacle in response to detecting that the first obstacle exists between the current position and the target traveling position of the robot.

According to a fourth aspect of the present disclosure, a computer-readable storage medium is provided, on which a computer program is stored. The computer program, when executed by a processor, causes the processor to implement the obstacle avoidance method for a robot as described above.

According to a fifth aspect of the present disclosure, an electronic device is provided, including one or more processors; and a memory configured to store one or more programs. The one or more programs, when executed by the one or more processors, cause(s) the one or more processors to implement the obstacle avoidance method for a robot as described above.

In the technical solution provided by some embodiments of the present disclosure, first, the target traveling position of the robot is determined, then the avoidance mode of the robot is determined, and after that, the robot is controlled to travel along the outer edge of the first obstacle so as to bypass the first obstacle in response to detecting that the first obstacle exists between the current position and the target traveling position of the robot during traveling of the robot. In one aspect, according to the present disclosure, the robot is controlled to travel along the outer edge of the first obstacle so as to bypass the first obstacle and reach the target traveling position in response to detecting the first obstacle during traveling of the robot. Thus, the robot is prevented from stopping running due to the first obstacle, the operation continuity of the robot is improved, and also the operation efficiency of the robot is improved. In another aspect, according to the present disclosure, when the robot encounters the first obstacle that is lower than the measurement height range of the robot and higher than the obstacle-crossing height threshold of the robot, the robot may be controlled to travel along the outer edge of the first obstacle so as to bypass the first obstacle. Thereby, the problem is avoided where the robot wastes energy due to continued travel under a measurement result of the LDS, the energy utilization ratio of the robot is improved, and the application range of the robot is expanded.

It should be understood that both the foregoing general descriptions and the following detailed descriptions are only exemplary and explanatory, and are not restrictive of the present disclosure.

### BRIEF DESCRIPTION OF THE DRAWINGS

The accompanying drawings here, which are incorporated in the Description and constitute a part of the Description, show embodiments conforming to the present disclosure, and are used to explain the principles of the present disclosure together with the Description. Understandably, the accompanying drawings in the following description are only some embodiments of the present disclosure, and for those of ordinary skills in the art, other drawings may also be obtained from these accompanying drawings without creative efforts. In the accompanying drawings:
FIG. 1 schematically shows an oblique view of a robot according to an exemplary embodiment of the present disclosure;
FIG. 2 schematically shows a schematic diagram of a bottom structure of the robot according to an exemplary embodiment of the present disclosure;
FIG. 3 schematically shows a flowchart of an obstacle avoidance method for a robot according to an exemplary embodiment of the present disclosure;
FIG. 4 schematically shows a simplified schematic diagram of the traveling path in the obstacle avoidance method for a robot according to an exemplary embodiment of the present disclosure;
FIG. 5 schematically shows a simplified schematic diagram of the traveling path in the obstacle avoidance method for a robot according to another exemplary embodiment of the present disclosure;
FIG. 6 schematically shows a block diagram of an obstacle avoidance apparatus for a robot according to an exemplary embodiment of the present disclosure;
FIG. 7 schematically shows a block diagram of the obstacle avoidance apparatus for a robot according to another exemplary embodiment of the present disclosure;
FIG. 8 schematically shows a block diagram of the obstacle avoidance apparatus for a robot according to another exemplary embodiment of the present disclosure; and
FIG. 9 schematically shows a block diagram of an electronic device according to an exemplary embodiment of the present disclosure.

### DETAILED DESCRIPTION

Exemplary embodiments will be described more fully with reference to the accompanying drawings. However, the exemplary embodiments may be implemented in various ways and shall not be construed as limited to the embodiments set forth herein. Instead, these embodiments are provided to make the present disclosure full and complete, and fully convey the concept of the exemplary embodiments to those skilled in the art. The features, structures, or characteristics described above may be combined in one or more embodiments in any suitable manner. In the following descriptions, numerous specific details are provided to give a thorough understanding of the embodiments of the present disclosure. However, those skilled in the art will recognize that the technical solutions of the present disclosure may be practiced without one or more of the specific details, or other methods, components, apparatuses, steps, etc. may be used. In other cases, well-known technical solutions are not shown or described in detail to avoid obscuring aspects of the present disclosure.

In addition, the accompanying drawings are merely used for schematic illustration but are not necessarily drawn to scale. The same reference numerals in the drawings denote the same or similar structures, and thus their detailed descriptions will be omitted. Some of the block diagrams shown in the drawings are functional entities that do not necessarily correspond to physically or logically independent entities. These functional entities may be implemented in the form of software, or in one or more hardware modules or integrated circuits, or in different networks and/or processor apparatuses and/or microcontroller apparatuses.

It should be noted that in the present disclosure, the terms "comprising" and "including" are used to indicate an open-ended inclusive meaning, and to mean that there may be other elements/components/etc. in addition to the listed elements/components/etc. In addition, the terms "first" and "second" used in the present disclosure are only for the purpose of distinction and should not be regarded as limitations to the content of the present disclosure.

The flowchart shown in the accompanying drawings is only an exemplary illustration, and does not necessarily include all the steps. For example, some steps may be decomposed, while others may be combined or partially combined, so that the actual order of execution may change according to the actual situation.

With the rapid development of science and technology, a variety of intelligent household appliances, for example, sweeping robots, are produced to free people's hands.

In case of free navigation (such as block crossing and recharging), the existing sweeping robot may generate a simultaneous map of an environment where the robot is located according to obstacle information fed back by the LDS, and autonomously determine a driving path and select an optimal path according to environmental information and an environmental map.

Also, the sweeping robot may first determine, by means of an ultrasonic sensor, physical characteristics of a surface to be cleaned, including the surface material, the degree of cleanliness, etc., and then is controlled to clean in a carpet mode. Alternatively, the sweeping robot may first determine a hovering position next to the robot's position by means of a cliff sensor, and then is controlled to reversely travel away from the hovering position. However, when an obstacle that cannot be determined by the LDS exists in the traveling direction of the sweeping robot, the sweeping robot cannot take corresponding measures against the obstacle, resulting in the problem of stopping running or continuing traveling in situ.

In view of this problem, the present disclosure provides a robot.

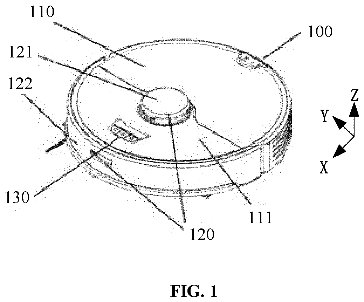

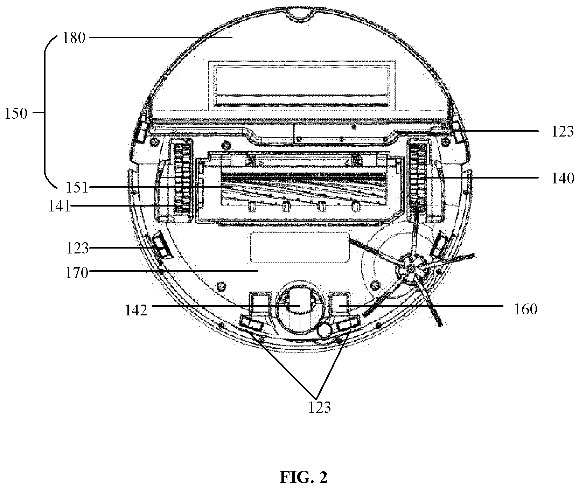

FIG. 1 and FIG. 2 are schematic structural diagrams of a robot according to an exemplary embodiment of the present disclosure. As shown in FIG. 1 and FIG. 2, the robot according to the present disclosure may be a sweeping robot, a mopping robot, a vacuum washing robot, or the like. The robot may include a mobile platform 100, a perception system 120, a human-computer interaction system 130, a driving system 140, a cleaning module 150, an energy system 160, and a control system 170.

The mobile platform 100 may be configured to automatically move on an operation surface in a target direction. The operation surface may be the surface to be cleaned by the robot. In some embodiments, the ground is the operation surface when the sweeping robot works on the ground.

In some embodiments, the mobile platform 100 may be an autonomous mobile platform, or a non-autonomous mobile platform. The autonomous mobile platform refers to that the mobile platform 100 itself can automatically and adaptively make an operational decision based on an unexpected environmental input. The non-autonomous mobile platform itself cannot adaptively make an operational decision based on an unexpected environmental input, but can execute a given procedure or operate according to a certain logic. Correspondingly, when the mobile platform 100 is the autonomous mobile platform, the target direction may be determined autonomously by the robot; and when the mobile platform 100 is the non-autonomous mobile platform, the target direction may be set systematically or manually. When the mobile platform 100 is the autonomous mobile platform, the mobile platform 100 includes a forward portion 111 and a rearward portion 110.

The perception system 120 includes a position determination apparatus 121 located above the mobile platform 100, a buffer 122 located on the forward portion 111 of the mobile platform 100, cliff sensors 123 located at a bottom of the mobile platform 100, and sensing apparatuses such as an ultrasonic sensor (not shown), an infrared sensor (not shown), a magnetometer (not shown), an accelerometer (not shown), a gyroscope (not shown), an odometer (not shown), and the like, for providing various position information and motion state information of the robot to the control system 170.

The position determination apparatus 121 includes, but is not limited to, a camera and an LDS. The LDS can monitor an event (or object) within a measurement height range above the robot. The measurement height range may be set to, for example, 8-10 cm above the robot.

In order to describe behaviors of the robot more clearly, directions are defined as follows: the robot may travel on the ground by various combinations of movements relative to the following three mutually perpendicular axes defined by the mobile platform 100, i.e., a transversal axis X, a front and rear axis Y, and a center vertical axis Z. A forward driving direction along the front and rear axis Y is designated as "forward", and a rearward driving direction along the front and rear axis Y is designated as "rearward". The transversal axis X substantially extends between a right wheel and a left wheel of the robot passing through an axis center defined by a center point of a driving wheel assembly 141. The robot may rotate around the X axis. It is referred to as "pitch up" when the forward portion of the robot is tilted upward and the rearward portion thereof is tilted downward. It is referred to as "pitch down" when the forward portion of the robot is tilted downward and the rearward portion thereof is tilted upward. In addition, the robot may rotate around the Z axis. In a forward direction of the robot, it is referred to as "turn right" when the robot is tilted to the right of the Y axis, and it is referred to as "turn left" when the robot is tilted to the left of the Y axis.

As shown in FIG. 2, the cliff sensors 123 are disposed at the bottom of the mobile platform 100 and in front of and behind the driving wheel assembly 141. The cliff sensors 123 are configured to prevent the robot that is moving back from falling off, so as to protect the robot against damages. The wording "front" refers to the same side as the advancing direction of the robot, and the wording "behind" refers to the side opposite to the advancing direction of the robot.

The various components in the perception system 120 may work independently or jointly to achieve intended functions more accurately. The surface to be cleaned is identified by the cliff sensor 123 and the ultrasonic sensor, such that the physical characteristics including the surface material, the degree of cleanliness, etc. of the surface to be cleaned are determined, and a more accurate determination may be made with the help of the camera, the LDS, etc.

For example, the ultrasonic sensor may determine whether the surface to be cleaned is a carpet or not. If the ultrasonic sensor determines that the surface to be cleaned is made of a carpet material, the control system 170 controls the robot to perform cleaning in a carpet mode.

The forward portion 111 of the mobile platform 100 is provided with the buffer 122. During cleaning, when the driving wheel assembly 141 propels the robot to travel on the ground, the buffer 122 monitors one or more events (or objects) in a driving path of the robot via a sensor system, e.g., an infrared sensor, and the robot may control the driving wheel assembly 141 based on the event (or object), such as obstacle and wall, detected by the buffer 122, so as to cause the robot to respond to the event (or object), for example, to move away from the obstacle and to cross over the obstacle.

In an exemplary embodiment of the present disclosure, the obstacle detection apparatus of the robot may further include a buffer 122, an infrared sensor, etc. The obstacle detection apparatus may also be configured to detect the presence or absence of a first obstacle between a current position of the robot and a target traveling position of the robot.

In an embodiment of the present disclosure, the height of the first obstacle is less than the measurement height range of the robot.

The control system 170 is disposed on a main circuit board in the mobile platform 100, and includes a computing processor, such as a central processing unit and an application processor, that communicates with a non-transitory memory, such as a hard disk, a flash memory, and a random-access memory. The application processor is configured to: receive environmental information detected by the plurality of sensors and transmitted from the perception system 120; generate a simultaneous map of an environment where the robot is located using a positioning algorithm, e.g., simultaneous localization and mapping (SLAM), based on obstacle information fed back by the LDS; autonomously determine a traveling path based on the environmental information and the environmental map; and then control the driving system 140 to perform operations, such as traveling forward, traveling backward, and/or steering, based on the autonomously determined traveling path. Further, the control system 170 may also determine whether to activate the cleaning module 150 to perform a cleaning operation based on the environmental information and the environmental map.

Specifically, based on distance information and speed information which are fed back by the buffer 122, the cliff sensors 123, and the sensing apparatuses such as the ultrasonic sensor, the infrared sensor, the magnetometer, the accelerometer, the gyroscope, and the odometer, the control system 170 may comprehensively determine a current operation state of a sweeper, such as crossing over a threshold, getting on a carpet, locating at an edge of a cliff, being stuck from above or below, having a full dust box, or being picked up, and will also give specific next-action strategies for different situations, so that the operation of the robot is more in line with requirements of an owner and a better user experience is provided. Further, the control system 170 may plan the most efficient and reasonable operation path and operation mode based on the simultaneous map generated by the SLAM, thereby greatly improving the operation efficiency of the robot.

In an exemplary embodiment of the present disclosure, the obstacle avoidance apparatus for the robot may include the control system 170. The obstacle avoidance apparatus for the robot may be configured to: determine the target traveling position of the robot; and control the robot to travel along an outer edge of a first obstacle so as to bypass the first obstacle in response to detecting that the first obstacle exists between the current position and the target traveling position of the robot.

The driving system 140 may execute a driving command based on specific distance and angular information, such as x, y, and 0 components, so as to manipulate the robot to travel across the ground. In order for the robot to move on the ground more stably or have a stronger movement ability, the robot may include one or more steering assemblies 142. The steering assembly 142 may be a driven wheel or a driving wheel, and structurally includes, but is not limited to, a universal wheel. The steering assembly 142 may be located in front of the driving wheel assembly 141.

The driving wheel assembly 141 may be detachably connected to the mobile platform 100 to facilitate assembly, disassembly, and maintenance. The driving wheel may have an offset drop type of suspension system that is movably fastened, e.g., rotatably attached, to the mobile platform 100 of the robot, and maintains contact and traction with the ground by an elastic element such as a tension spring or a compression spring with a certain grounding force. In the meanwhile, the cleaning module 150 of the robot is also in contact with the surface to be cleaned with a certain pressure. The cleaning module 150 may include a dry cleaning module 151 and/or a wet cleaning module 180.

The energy system 160 includes a rechargeable battery, such as a Ni-MH battery and a lithium battery. The rechargeable battery may be connected to a charging control circuit, a battery pack charging temperature detecting circuit, and a battery undervoltage monitoring circuit, which are then connected to a single chip microcomputer control circuit. A host machine is charged by connecting a charging electrode disposed on a side of or below the machine body to a charging pile. If the exposed charging electrode is covered with dust, the plastic body around the electrode will melt and deform due to the accumulative effect of charges in the process of charging, and even the electrode itself will be deformed, making it impossible to continue normal charging.

The human-computer interaction system 130 includes buttons that are on a panel of the host and used by a user to select functions. The human-computer interaction system may further include a display screen and/or an indicator light and/or a loudspeaker that present a current state or function item of the robot to the user. The human-computer interaction system may further include a mobile client program.

It should be noted that in an exemplary embodiment of the present disclosure, an obstacle avoidance method for a robot described below may be implemented by a robot (such as a sweeping robot and a mopping robot). That is, all steps of the obstacle avoidance method for a robot may be executed by the robot. In this case, the obstacle avoidance apparatus for the robot may be configured in the robot.

Next, all the steps of the obstacle avoidance method for a robot in an exemplary embodiment will be described in more detail with reference to the accompanying drawings and embodiments.

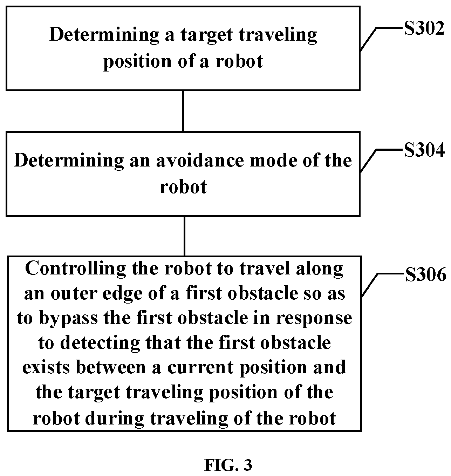

FIG. 3 schematically shows a flowchart of an obstacle avoidance method for a robot according to an exemplary embodiment of the present disclosure. In the following illustration, the robot is taken as an execution subject for illustration. Referring to FIG. 3, the robot obstacle avoidance method may specifically include the following steps S302, S304, and S306.

In step S302, a target traveling position of the robot is determined.

In an exemplary embodiment of the present disclosure, the target traveling position may refer to a position determined by the robot based on a target traveling point for the current time. The target traveling position may be a position determined by the autonomously traveling robot, or a position to be reached by the robot as input by a user via a mobile phone client.

For example, in case of low power, the sweeping robot stops sweeping and returns to a charging pile for charging, and in this case, the position of the charging pile is the target traveling position.

In step S304, an avoidance mode of the robot is determined.

The sweeping robot may also determine the avoidance mode according to an avoidance mode selected by the user or automatically selected by the sweeping robot based on a stored map, in conjunction with the current operation state of the sweeper comprehensively determined with reference to distance information and speed information fed back by the sensing apparatuses such as the buffer 122, the cliff sensor 123, the ultrasonic sensor, the infrared sensor, the magnetometer, the accelerometer, the gyroscope, and the odometer.

In step S306, the robot is controlled to travel along an outer edge of a first obstacle so as to bypass the first obstacle in response to detecting that the first obstacle exists between the current position and the target traveling position of the robot during traveling of the robot.

In an embodiment of the present disclosure, the height of the first obstacle may be less than the measurement height range of the robot and greater than the obstacle-crossing height threshold of the robot. The measurement height range may refer to the range of measurement height of the robot's LDS. The obstacle-crossing height threshold may refer to a height value at which the robot can cross over the first obstacle. In an exemplary embodiment of the present disclosure, the first obstacle may be an obstacle that cannot be crossed over by the robot and of which the height cannot be measured. The buffer located on the forward portion 111 of the mobile platform 100 of the robot may detect the first obstacle, for example, an infrared sensor, and detect a step in the robot's traveling path beyond the measurement height range. According to the present disclosure, there may be one or more obstacles.

The outer edge of the first obstacle may be in a regular shape, such as a square shape and a rectangular shape, or in an irregular shape, which is not limited in the present disclosure.

For example, when the measurement height range of the sweeping robot is 8-10 cm above the robot, and the obstacle-crossing height range of the sweeping robot is 2 cm above the ground, the first obstacle may be any obstacle with a height of 2-8 cm.

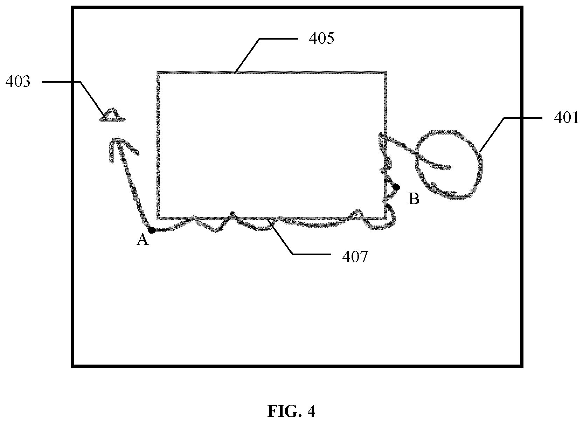

In an exemplary embodiment of the present disclosure, the current position of the robot may be a position at which the robot is currently traveling. As shown in FIG. 4, the position of a point A is the current position of the robot when the robot 401 travels to the point A; and the position of a point B is the current position of the robot when the robot 401 travels to the point B.

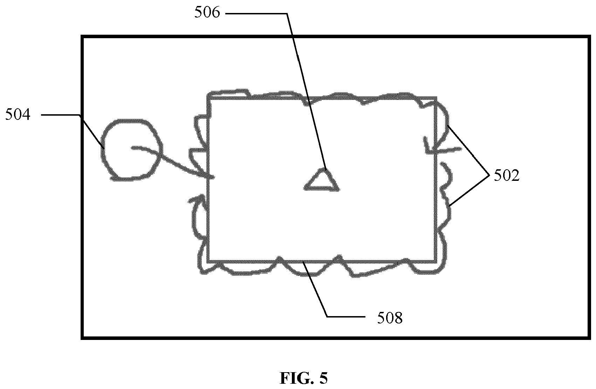

The target traveling position may be, but is not limited to, located outside an area occupied by the first obstacle, and the target traveling position may also be located within the area occupied by the first obstacle. As shown in FIG. 4, the target traveling position 403 is located outside the area occupied by the first obstacle 405. As shown in FIG. 5, the target traveling position 506 is located within the area occupied by the first obstacle 508.

The robot is controlled to travel along the outer edges of the first obstacles so as to bypass the plurality of first obstacles, in response to detecting that the plurality of first obstacles exist between the current position and the target traveling position of the robot.

In an exemplary embodiment of the present disclosure, the robot is controlled to travel along an outer edge of a first obstacle so as to bypass the first obstacle and reach the target traveling position, in response to detecting that the first obstacle exists between the current position and the target traveling position of the robot during traveling of the robot. Thus, the robot is prevented from stopping running due to the first obstacle, the operation continuity of the robot is improved, and also the operation efficiency of the robot is improved.

In an exemplary embodiment of the present disclosure, the robot may first monitor the distance between the robot and the first obstacle; and then the robot is controlled to travel along the outer edge of the first obstacle when the distance is less than a distance threshold.

The robot may monitor the distance between the central position of the first obstacle and the central position of the robot, and may also monitor the distance between the outer edge of the first obstacle near the robot and the forward portion 111 of the mobile platform 100. The distance threshold may be different according to different monitoring methods.

The robot may detect the first obstacle by means of the infrared sensor, and the robot may be controlled to travel along the edge of the first obstacle when the robot travels to a position corresponding to a distance less than the distance threshold.

It should be noted that the position at which the robot according to the present disclosure detects the first obstacle may be farther than the position from which the robot initially travels along the outer edge of the first obstacle. In the case where the position at which the robot detects the first obstacle may be farther than the position from which the robot initially travels along the outer edge of the first obstacle, the robot is controlled to travel along the edge of the first obstacle when the distance between the current position of the robot and the first obstacle is less than the distance threshold.

In an exemplary embodiment of the present disclosure, the robot is controlled to deflect by a preset angle and advance away from the first obstacle when the distance is less than the distance threshold; and the robot is controlled to deflect reversely by the preset angle and travel towards the first obstacle when the distance between the first obstacle and the current position of the robot after advancing is greater than the distance threshold.

In an embodiment of the present disclosure, the distance threshold may be a value by which the distance between the robot and the first obstacle is limited to be always within a distance range. The preset angle may refer to an angle by which the traveling direction is adjusted during traveling of the robot. A traveling path 407 of a robot 401 is as shown in FIG. 4, and a traveling path 502 of a robot 504 is as shown in FIG. 5. The traveling path 407 and the traveling path 502 are both enlarged traveling paths and wave-shaped paths. The preset angles of deflection in the traveling path 407 and the traveling path 502 may be different. From the user's perspective, the traveling path 407 and the traveling path 502 are both straight-line paths or approximate straight-line paths where the robot and the obstacle are kept the distance threshold away from each other.

In an exemplary embodiment of the present disclosure, the presence or absence of a first obstacle between the current position and the target traveling position of the robot may be detected, when the robot deflects reversely by a preset angle and travels towards the first obstacle. The robot is controlled to travel to a position that is kept the distance threshold away from the first obstacle, and to travel along the outer edge of the first obstacle, when the first obstacle exists between the current position and the target traveling position of the robot.

According to the present disclosure, when the robot encounters the first obstacle with a height that is less than the measurement height range of the robot and greater than the obstacle-crossing height threshold of the robot, the robot may be controlled to travel along the outer edge of the first obstacle so as to bypass the first obstacle. Thereby, the problem is avoided where the robot wastes energy due to continued travel under a measurement result of the LDS. The energy of the robot is used to bypass the obstacle so as to reach the target traveling position, such that the energy utilization ratio of the robot is improved, and the application range of the robot is expanded.

According to an exemplary embodiment of the present disclosure, the presence or absence of a first obstacle between the current position and the target traveling position of the robot is detected at preset time intervals during traveling along the outer edge of the first obstacle.

In an embodiment of the present disclosure, the preset time interval may be set according to actual traveling of the robot. The preset time interval is related to the traveling speed and the traveling environment of the robot.

The robot continues traveling along the outer edge of the first obstacle, in response to detecting that a part of the first obstacle or an entirety of the first obstacle exists between the current position and the target traveling position of the robot.

The robot is controlled to continue traveling along a target traveling path to reach the target traveling position, in response to detecting the absence of the first obstacle between the robot and the target traveling position.

In an exemplary embodiment of the present disclosure, the target traveling path is a straight-line path or an approximate straight-line path between the robot and the target traveling position.

As shown in FIG. 4, in response to detecting the absence of the first obstacle 405 between the robot 401 and the target traveling position 403 after the robot 401 travels to the point A along the outer edge of the first obstacle 405, the robot 401 is controlled to continue traveling along the target traveling path to reach the target traveling position 403.

According to the present disclosure, the presence or absence of a first obstacle between the current position and the target traveling position of the robot is detected at preset time intervals during traveling along the outer edge of the first obstacle, thereby avoiding wasting energy in traveling along the outer edge of the first obstacle, which would prolong the time to reach the target traveling position. According to the present disclosure, energy resources are saved, and the operation efficiency is improved.

According to an exemplary embodiment of the present disclosure, the robot may determine a reverse direction of a current traveling direction when a second obstacle exists in the current traveling direction of the robot during traveling along the outer edge of the first obstacle; and based on the reverse direction, the robot is controlled to travel along the outer edge of the first obstacle so as to bypass the first obstacle.

In an exemplary embodiment of the present disclosure, the second obstacle may be located at the outer edge of the first obstacle and may prevent the robot from continuing traveling. The second obstacle may be an obstacle currently detected by the robot. For example, the second obstacle may be a hovering position detected by the cliff sensor in the perception system 120 of the robot, a magnetic virtual wall detected by the magnetic sensor in the perception system 120 of the robot, or an an uncrossable carpet detected by the ultrasonic sensor in the perception system 120 of the robot.

The second obstacle may be an obstacle detected during historical operation of the robot, and the position of a historical obstacle is stored. During travel of the robot along the outer edge of the first obstacle, when the robot determines, based on the position of the historical obstacle, that a second obstacle exists in the current traveling direction of the robot, the robot is controlled, based on the reverse direction, to travel along the outer edge of the first obstacle so as to bypass the first obstacle.

According to an exemplary embodiment of the present disclosure, the robot is controlled to end traveling and to send a warning message, in response to detecting that a first obstacle exists between the current position and the target traveling position of the robot after the robot travels around the outer edge of the first obstacle once.

The warning message may be, but is not limited to, a voice message, an indicator message, etc. All the methods that can send the warning message belong to the scope of protection of the present disclosure.

It is detected that a first obstacle exists between the current position and the target traveling position of the robot after the robot travels around the outer edge of the first obstacle once. That is, at each position along the outer edge of the first obstacle, the robot detects that a first obstacle exists between the position and the target traveling position of the robot.

As shown in FIG. 5, the target traveling position 506 is located in the middle of the first obstacle 508.

In response to detecting that a first obstacle 508 exists between the current position and the target traveling position 506 of the robot 504 after the robot 504 travels around the outer edge of the first obstacle 508 once, the robot is controlled to end traveling and to send a warning message indicating that the target traveling position 506 is not reached and the travel is ended,.

According to the present disclosure, the robot is controlled to end traveling in response to detecting that a first obstacle exists between the current position and the target traveling position of the robot after the robot travels around the outer edge of the first obstacle once, thereby avoiding energy waste of the robot due to continued detouring and thus saving energy for the robot.

It should be noted that although the individual steps of the method in the present disclosure are depicted in the accompanying drawings in a specific order, it is not required or implied that these steps must be performed in this specific order, or that all the steps shown must be performed to achieve the desired results. Additionally or alternatively, some steps may be omitted, multiple steps may be combined into one step for execution, and/or one step may be broken down into multiple steps for execution, etc.

Further, in an exemplary embodiment of the present disclosure, an obstacle avoidance apparatus for a robot is further provided.

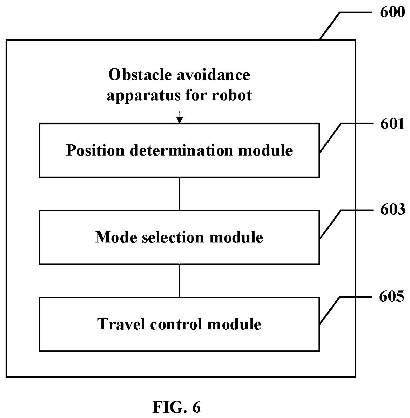

FIG. 6 schematically shows a block diagram of an obstacle avoidance apparatus for a robot according to an exemplary embodiment of the present disclosure. Referring to FIG. 6, an obstacle avoidance apparatus 600 for a robot according to an exemplary embodiment of the present disclosure may include a position determination module 601, a mode selection module 603, and a travel control module 605.

In an embodiment of the present disclosure, the position determination module 601 is configured to determine a target traveling position of the robot; the mode selection module is configured to determine an avoidance mode of the robot; and the travel control module 605 is configured to control the robot to travel along an outer edge of a first obstacle so as to bypass the first obstacle in response to detecting that the first obstacle exists between a current position and the target traveling position of the robot during traveling of the robot, where the height of the first obstacle is less than a measurement height range of the robot and greater than an obstacle-crossing height threshold of the robot.

According to another embodiment of the present disclosure, the travel control module 605 may be configured to monitor the distance between the robot and the first obstacle, and control the robot to travel along the outer edge of the first obstacle when the distance is less than a distance threshold.

According to another embodiment of the present disclosure, the travel control module 605 may be further configured to: control the robot to deflect by a preset angle to advance away from the first obstacle when the distance is less than the distance threshold; and control the robot to deflect reversely by the preset angle to travel towards the first obstacle when the distance between the first obstacle and the current position of the robot after advancing is greater than the distance threshold.

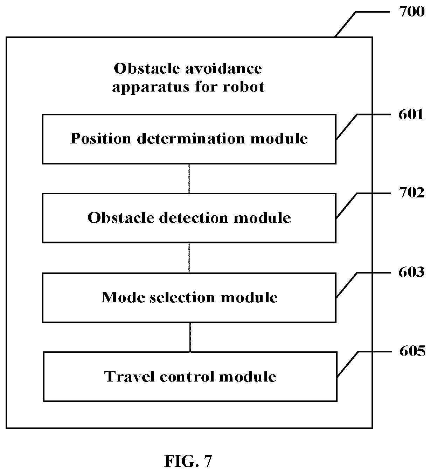

Referring to FIG. 7, compared with the obstacle avoidance apparatus 600 for a robot, the obstacle avoidance apparatus 700 for a robot may further include an obstacle detection module 702. The obstacle detection module 702 is configured to detect the presence or absence of a first obstacle between the current position and the target traveling position of the robot at preset time intervals during traveling along the outer edge of the first obstacle.

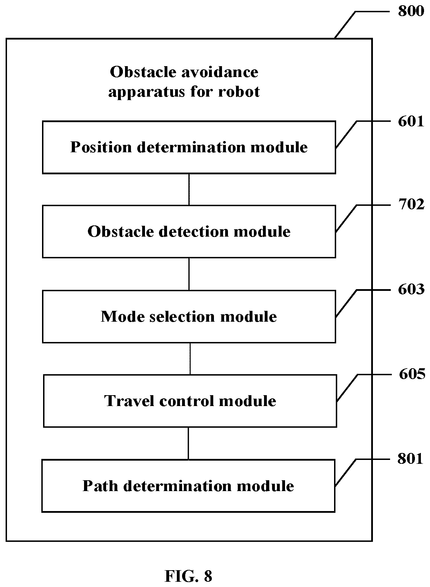

Referring to FIG. 8, compared with the obstacle avoidance apparatus 700 for a robot, the obstacle avoidance apparatus 800 for a robot may further include a path determination module 801. The path determination module 801 is configured to control the robot to continue traveling along a target traveling path to reach the target traveling position in response to detecting the absence of the first obstacle between the robot and the target traveling position. The target traveling path is a straight-line path or an approximate straight-line path between the robot and the target traveling position.

According to another embodiment of the present disclosure, the obstacle avoidance apparatus 600 for a robot may further include a direction adjustment module, configured to: determine a reverse direction of a current traveling direction when a second obstacle exists in the current traveling direction of the robot during traveling along the outer edge of the first obstacle; and based on the reverse direction, control the robot to travel along the outer edge of the first obstacle so as to bypass the first obstacle, where the second obstacle is located at the outer edge of the first obstacle and prevents the robot from continuing traveling.

According to another embodiment of the present disclosure, the obstacle avoidance apparatus 600 for a robot may further include a position comparison module, configured to: control the robot to end traveling and to send a warning message, in response to detecting that a first obstacle exists between the current position and the target traveling position of the robot after the robot travels around the outer edge of the first obstacle once.

The specific details of each module/unit in the above-mentioned apparatuses have been explained in detail in the embodiments of the method section, and thus will not be repeated herein.

In an exemplary embodiment of the present disclosure, a computer-readable storage medium is further provided, on which a program product capable of implementing the above-mentioned method in the Description is stored. In some possible embodiments, various aspects of the present disclosure may also be realized in the form of a program product, which includes a program code for causing a terminal device to perform the steps according to various exemplary embodiments of the present disclosure described in the above "exemplary method" section of the Description when the program product runs on the terminal device.

In an exemplary embodiment of the present disclosure, an electronic device capable of implementing the method described above is further provided.

It can be appreciated by those skilled in the art that various aspects of the present disclosure may be implemented as systems, methods or program products. Therefore, various aspects of the present disclosure may be embodied in the following forms: an entirely hardware implementation, an entirely software implementation (including firmware, microcode, etc.), or an implementation combining hardware and software aspects, which may be collectively referred to as a "circuit", "module", or "system" herein.

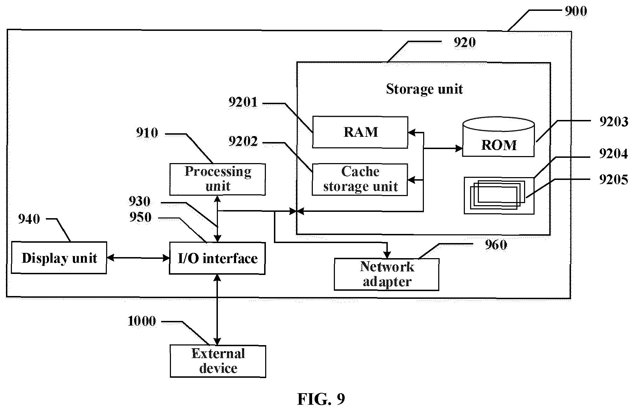

An electronic device 900 according to an embodiment of the present disclosure is described below with reference to FIG. 9. The electronic device 900 shown in FIG. 9 is merely an example and should not impose any limitations on the functionality or scope of use of embodiments of the present disclosure.

As shown in FIG. 9, the electronic device 900 is represented in the form of a general-purpose computing device. Components of the electronic device 900 may include, but are not limited to, at least one processing unit 910 described above, at least one storage unit 920 described above, a bus 930 for connecting different system components including the storage unit 920 and the processing unit 910, and a display unit 940.

In an embodiment of the present disclosure, the storage unit stores a program code which is executable by the processing unit 910, such that the processing unit 910 performs the steps according to various exemplary embodiments of the present disclosure described in the above-mentioned "exemplary method" section of the Description. For example, the processing unit 910 may perform steps S302 to S306 as shown in FIG. 3.

The storage unit 920 may include a readable medium in the form of a volatile storage unit, such as a random access memory (RAM) 9201 and/or a cache storage unit 9202, and may further include a read-only memory (ROM) 9203.

The storage unit 920 may further include a program/utility 9204 with a set of (at least one) program modules 9205. Such program modules 9205 include, but are not limited to, an operation system, one or more application programs, other program modules and program data. Each or some combinations of these examples may include the implementation of a network environment.

The bus 930 may represent one or more of several types of bus structures, including a memory cell bus or a memory cell controller, a peripheral bus, an accelerated graphics port, a processing unit, or a local bus using any of a variety of bus structures.

The electronic device 900 may also communicate with at least one external device 1000 (such as a keyboard, a pointing device, a Bluetooth device, etc.), and may also communicate with at least one device that enable(s) a user to interact with the electronic device 900, and/or communicate with any device (such as a router, a modem, etc.) that enables the electronic device 900 to communicate with at least one other computing device. This communication may be performed via an input/output (I/O) interface 950. In addition, the electronic device 900 may also communicate with at least one network (for example, a local area network (LAN), a wide area network (WAN) and/or a public network, such as the Internet) via a network adapter 960. As shown in the figure, the network adapter 960 communicates with other modules of the electronic device 900 via the bus 930. It should be understood that although not shown in the figure, other hardware and/or software modules may be used in conjunction with the electronic device 900, including, but not limited to: microcode, device drivers, redundant processing units, external disk drive arrays, and redundant arrays of independent disks (RAID) systems, tape drives, and data backup storage systems.

Through the descriptions of the above embodiments, it is easy for those skilled in the art to understand that the exemplary embodiments described herein may be realized by software or a combination of software and necessary hardware. Therefore, the technical solution according to an embodiment of the present disclosure may be embodied in the form of a software product. The software product may be stored in a non-volatile storage medium (a CD-ROM, a USB flash drive, a mobile hard disk, etc.) or on the network, and includes several instructions to cause a computing device (which may be a personal computer, a server, a terminal apparatus, a network device, or the like) to perform the method according to embodiments of the present disclosure.

In addition, the above drawings are merely schematic illustrations of the processing included in the method according to exemplary embodiments of the present disclosure, and are not used for limiting purposes. It is easy to understand that the processing shown in the above figures do not indicate or limit the time sequence of these processing. In addition, it is also easy to understand that these processing may be performed synchronously or asynchronously in multiple modules, for example.

It should be noted that although in the detailed descriptions above, a reference is made to a number of modules or units of the device for action execution, the division is not mandatory. In fact, according to embodiments of the present disclosure, the features and functions of two or more modules or units described above may be embodied in one module or unit. In contrast, the features and functions of one module or unit described above may be further divided into and embodied by multiple modules or units.

Other embodiments of the present disclosure will be apparent to those skilled in the art from consideration of the description and practice of the content disclosed herein. The present disclosure is intended to cover any variations, uses, or adaptations of the present disclosure following the general principles thereof and including common knowledge or commonly used technical measures which are not disclosed herein. The description and the embodiments are to be considered as exemplary only, with the true scope and spirit of the present disclosure indicated by the claims.

It should be appreciated that the present disclosure is not limited to the exact construction that has been described above and illustrated in the accompanying drawings, and that various modifications and changes may be made without departing from the scope of the present disclosure. It is intended that the scope of the present disclosure is only limited by the appended claims.

## Claims

1. An obstacle avoidance method for a robot, comprising:
determining a target traveling position of the robot;
determining an avoidance mode of the robot; and
in response to detecting that a first obstacle exists between a current position and the target traveling position of the robot during traveling of the robot, controlling the robot to travel along an outer edge of the first obstacle so as to bypass the first obstacle,
wherein a height of the first obstacle is less than a measurement height range of the robot.

2. The obstacle avoidance method for a robot according to claim 1, wherein controlling the robot to travel along the outer edge of the first obstacle comprises:
monitoring a distance between the robot and the first obstacle; and
controlling the robot to travel along the outer edge of the first obstacle when the distance is less than a distance threshold.

3. The obstacle avoidance method for a robot according to claim 2, wherein controlling the robot to continue traveling along the outer edge of the first obstacle when the distance is less than the distance threshold comprises:
controlling the robot to deflect by a preset angle to advance away from the first obstacle when the distance is less than the distance threshold; and
controlling the robot to deflect reversely by the preset angle to travel towards the first obstacle when the distance between the first obstacle and the current position of the robot after advancing is greater than the distance threshold.

4. The obstacle avoidance method for a robot according to any one of claims 1-3, further comprising:
detecting presence or absence of the first obstacle between the current position and the target traveling position of the robot at preset time intervals during traveling along the outer edge of the first obstacle.

5. The obstacle avoidance method for a robot according to claim 4, further comprising:
in response to detecting the absence of the first obstacle between the robot and the target traveling position, controlling the robot to continue traveling along a target traveling path to reach the target traveling position,
wherein the target traveling path is a straight-line path or an approximate straight-line path between the robot and the target traveling position.

6. The obstacle avoidance method for a robot according to any one of claims 1-3, further comprising:
determining a reverse direction of a current traveling direction when a second obstacle exists in the current traveling direction of the robot during traveling along the outer edge of the first obstacle; and
controlling, based on the reverse direction, the robot to travel along the outer edge of the first obstacle so as to bypass the first obstacle,
wherein the second obstacle is located at the outer edge of the first obstacle and prevents the robot from continuing traveling,
and/or,
the obstacle avoidance method further comprises: controlling the robot to end traveling and to send a warning message, in response to detecting that the first obstacle exists between the current position and the target traveling position of the robot after the robot travels around the outer edge of the first obstacle once.

7. An obstacle avoidance apparatus for a robot, comprising:
a position determination module, configured to determine a target traveling position of the robot;
a mode selection module, configured to determine an avoidance mode of the robot; and
a travel control module, configured to control the robot to travel along an outer edge of a first obstacle so as to bypass the first obstacle, in response to detecting that the first obstacle exists between a current position and the target traveling position of the robot during traveling of the robot,
wherein a height of the first obstacle is less than a measurement height range of the robot.

8. An obstacle avoidance apparatus for a robot according to claim 7, wherein the travel control module is configured to:
monitor a distance between the robot and the first obstacle, and
control the robot to travel along the outer edge of the first obstacle when the distance is less than a distance threshold.

9. The obstacle avoidance apparatus for a robot according to claim 8, wherein the travel control module is further configured to:
control the robot to deflect by a preset angle to advance away from the first obstacle when the distance is less than the distance threshold; and
control the robot to deflect reversely by the preset angle to travel towards the first obstacle when the distance between the first obstacle and the current position of the robot after advancing is greater than the distance threshold.

10. The obstacle avoidance apparatus for a robot according to any one of claims 7-9, further comprising:
an obstacle detection module, configured to detect presence or absence of the first obstacle between the current position and the target traveling position of the robot at preset time intervals during traveling along the outer edge of the first obstacle.

11. The obstacle avoidance apparatus for a robot according to claim 10, further comprising:
a path determination module, configured to control the robot to continue traveling along a target traveling path to reach the target traveling position, in response to detecting the absence of the first obstacle between the robot and the target traveling position,
wherein the target traveling path is a straight-line path or an approximate straight-line path between the robot and the target traveling position.

12. The obstacle avoidance apparatus for a robot according to any one of claims 7-9, further comprising:
a direction adjustment module, configured to:
determine a reverse direction of a current traveling direction when a second obstacle exists in the current traveling direction of the robot during traveling along the outer edge of the first obstacle; and
control, based on the reverse direction, the robot to travel along the outer edge of the first obstacle so as to bypass the first obstacle,
wherein the second obstacle is located at the outer edge of the first obstacle and prevents the robot from continuing traveling.

13. The obstacle avoidance apparatus for a robot according to claim 12, further comprising:
a position comparison module, configured to control the robot to end traveling and to send a warning message, in response to detecting that the first obstacle exists between the current position and the target traveling position of the robot after the robot travels around the outer edge of the first obstacle once.

14. A robot, comprising:
an obstacle detection apparatus, configured to detect presence or absence of a first obstacle between a current position of the robot and a target traveling position of the robot, wherein a height of the first obstacle is less than a measurement height range of the robot; and
an obstacle avoidance apparatus for the robot, configured to: determine the target traveling position of the robot; determine an avoidance mode of the robot; and control the robot to travel along an outer edge of the first obstacle so as to bypass the first obstacle, in response to detecting that the first obstacle exists between the current position and the target traveling position of the robot.

15. A computer-readable storage medium having a computer program stored thereon, wherein the computer program, when executed by a processor, implements the obstacle avoidance method for a robot according to any one of claims 1-6.

16. An electronic device, comprising:
one or more processors; and
a memory, configured to store one or more programs, wherein
the one or more programs, when executed by the one or more processors, cause(s) the one or more processors to implement the obstacle avoidance method for a robot according to any one of claims 1-6.
